# EUROPEAN PATENT APPLICATION

(11) **EP 3 761 246 A1**
(43) Date of publication of application: **06.01.2021**
(21) Application number: 19000490.3
(22) Date of filing: 28.10.2019
(51) Int. Cl.: G06Q 20/10, G06Q 20/18, G06Q 20/32, G07F 17/32

(54) **AUTOMATIC CASH MACHINE SET FOR OBTAINING CREDIT AND A VALIDATION MACHINE THEREOF IN PREMISES WITH GAMING MACHINES**

(30) Priority: 31.10.2018 ES 201831668 U; 10.10.2019 ES 201931654 U
(71) Applicant: Finansoportes Consulting, S.L., 28939 Arroyomolinos Madrid (ES)
(72) Inventor: GRANDIO ASCARIZ, José Marcos, 28939 Arroyomolinos (Madrid) (ES); NAVERAC BENEDICTO, Enrique, 50190 Garrapinillos (Zaragoza) (ES)
(74) Representative: Botella Reyna, Juan

(57) **Abstract**

Automatic cash machine set for obtaining credit with a validation machine thereof in premises with gaming machines, consisting of a rectangular cash dispenser structure, comprising a screen (4), pushbuttons (3), a keyboard (5) and a magnetic card reader (6), together with a card, slips, cheque, tokens and SMS codes validation machine, consisting of a structure (8) containing an interface for communication and reading of documents (9), such as cards, cheques and slips, a token insert device (10), a screen (11), an alpha-numeric keyboard (12) and a cash dispenser device (13), controlled by a CPU (central processing unit). The exchangeable credit vouchers or certificates issued by a cash dispenser (7) can be exchanged for cash, receiving codes and SMSs to validate the exchange processes.

## Description

The present invention, automatic cash machine set for obtaining credit with a validation machine thereof in premises with gaming machines, refers to a particular cash machine, which dispenses cash, with a machine that can validate cards, cheques, tokens, SMS codes, as well providing change for notes, to be used in machines in gambling premises.

Therefore, the object of the present invention will be of interest in the telecommunication machine industry for commercial operations and transactions and specific cash dispensers related to gambling activities.

### STATE OF THE ART

In the field of commercial transactions and that of telecommunication machines specifically designed for their performance, there Is a wide variety of designs and inventions.

By way of example, the following inventions may be cited in relation to transactions carried out by means of automatic cash machines or by means of terminals for the carrying out of remote commercial and financial transactions.

European Patent EP 1257984, priority 07.02.2000, by the inventors RENZO BALAGION and CLAUDIO ALTAVILLA, entitled "A METHOD, SYSTEM AND DEVICE FOR PERFORMING REMOTE TRADE TRANSACTIONS" presents a method for carrying out remote commercial and financial transactions, which includes the operation of wirelessly transmitting preparatory data for the financial transaction between a personal remote device containing resident means of payment, and a fixed payment terminal,

European Patent EP 1783676, priority 05.07.2004, by the inventors Aurora Mateo Delgado, Pilar Fernández Hermosilla and Juan Perez Gómez, entitled "METHOD FOR OBTAINING CASH FROM CASH MACHINES WITHOUT A CARD, THROUGH A PAYMENT ORDER VIA SMS", presents an automatic cash machine through which cash can be obtained without the use of bank cards.

The present invention, however, claims a set specifically designed to be used in gambling premises or in premises where gaming machines are located.

At present, automatic cash machines for obtaining cash, whether from banks or non-financial companies, are subject to certain regulations from central banks (or state regulatory bodies) that make their incorporation difficult for small and medium-sized enterprises.

These small and medium enterprises currently operate small gaming rooms with gaming machines or even other small premises that have these types of machines.

Consequently, when a customer runs out of cash, playing arcades, they need to leave the premises to go to a cash machine in the vicinity, usually of a financial or banking institution, to be able to obtain more cash and to be able to continue playing, on their return. It is known by fans of these types of machine that prizes are won cyclically, and so the moment a customer leaves the establishment or premises where they are playing, in this case to go to a bank teller for more cash, another customer may begin playing with the same machine that the former had left, before winning significant prizes. Upon returning, the former would lose their opportunity to win, all because they had to go outside the premises to look for an external teller.

On the other hand, the provision of cash, both coins and banknotes, by means of dispensers is very common in commercial transactions in general. However, In the gaming and betting sector, transactions have particular requirements, due to regulatory reasons of this sector, in most countries. One of these particular requirements is the need to identify the person who is placing the bets, in order to be able to control whether they are of legal age and that they are not currently in a situation In which the law deems them unsuitable to enter centres where the bets are made.

In the present invention, however, a set is claimed that includes a machine for validating cards, cheques, tokens, SMS codes, which can be exchanged for cash, being specifically designed to be used in gambling premises or in premises where gaming machines are located.

The validation of cards, slips, cheques, tokens and SMS codes, in premises with gaming machines, by means of this invention, enables these payment instruments to be verified and in turn can work in connection, performing functions of identification of the transactions and of the person who is making them, and making the change for cash, which allows gambling and betting in the premises.

Therefore, this invention is an improvement over existing devices, representing an advance in the state of the art regarding these types of devices.

### DESCRIPTION

The present automatic cash machine set for obtaining credit with a validation machine thereof in premises with gaming machines, which is described below, is constituted by a structure comprising an automatic cash machine and a validation machine, which dispenses credit slips or certificates that can be exchanged for cash to be used in the gaming machines of the establishment.

These certificates can take various forms, ranging from mere cheques or vouchers redeemable at the shop to tokens usable on the gaming machines or game credits on the machines themselves if the connection between the machines and the cash machine is authorised.

The cash machine has a magnetic card reader, so that in certain cases, transactions charged to bank cards identified by the cash machine can be authorised.

In some cases, magnetic cards may not be bank cards, but customer identification cards.

Transactions can also be generated in other ways, through a mobile phone application or generated through SMS messages.

In order to complete the transactions, the cash machine has a screen and a keyboard.

Finally, the cash machine has a dispenser of the aforementioned credit vouchers or certificates

Internally, the cash machine has internal means of communication within the premises or external through the telephone network, or with the local Wi-Fi Internet access network.

The set also includes a card, slip, cheque, token and SMS code validation machine, which in turn is made up of a furniture or container structure that can have commercial-type decorative elements on the outside and which groups together the following main elements:
- a communication interface with the outside.
- a device for reading cards, slips and cheques
- a token insert device
- a screen for displaying process information
- an alpha-numeric keyboard.
- cash dispensers: for banknotes and coins.
- a CPU (central processing unit) inside.

The input device for cards, slips and cheques allows them to be validated through their reading and identification, in order to be exchanged for cash at the gambling establishment where the machine is located.

In this validation machine, the mentioned communication interface with the exterior can act as an SMS validation code receiver for the cash exchange processes.

The set described can be installed as a terminal for commercial transactions, without the need to comply with certain regulatory precepts applicable to bank tellers, thus simplifying its implementation by small and medium, non-financial enterprises, which have gaming machines on their premises.

Finally, the structure of the cash machine and validation machine, as it has the shape of a piece of furniture, can have decorative elements of a commercial type on the outside.

### PREFERRED EMBODIMENT OF THE INVENTION

Below, a detailed description will be made of automatic cash machine set for obtaining credit with a validation machine thereof in premises with gaming machines, with reference to the attached drawings, which represents, for illustrative and non-limitative purposes, a preferential form of embodiment susceptible of all those variations of detail that do not suppose a fundamental alteration of the essential characteristics of these improvements.

These drawings illustrate:

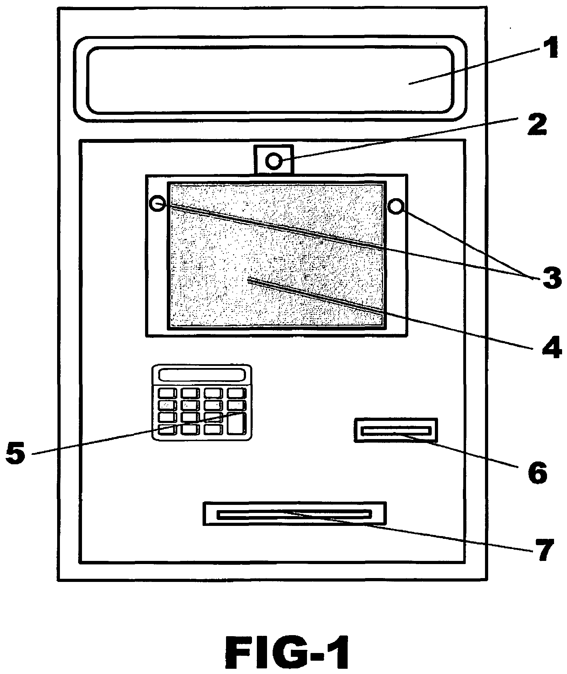

In Figure 1: Frontal elevation view of a cash machine of the automatic cash machine set for obtaining credit with a validation machine thereof in premises with gaming machines.

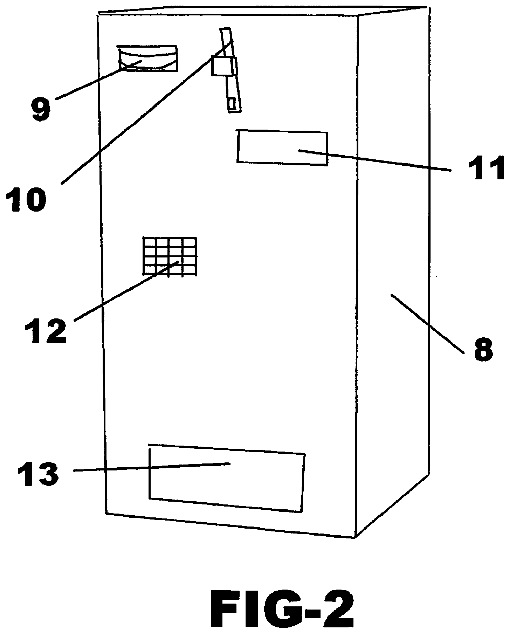

In Figure 2: Perspective view of a validation machine of the automatic cash machine set for obtaining credit with a validation machine thereof in premises with gaming machines.

According to the example of embodiment represented, the automatic cash machine set for obtaining credit with a validation machine thereof in premises with gaming machines is comprised of an automatic cash structure, of rectangular shape, comprising a screen (4) associated with a set of pushbuttons (3) in its perimeter, a keyboard (5) independent for the completion of commercial transactions and a magnetic card reader (6), together with a machine for the validation of cards, cheques, tokens and SMS codes, constituted by a furniture-type structure (8) containing the main elements: an interface for external communication and reading of documents (9), such as cards, slips and cheques, a token insert device (10), a screen (11) for presenting process information, an alpha-numeric keypad (12), a cash dispenser device (13), all controlled by a CPU (central processing unit).

The set has a dispenser (7) of cheques or certificates of credit exchangeable in the establishment where it Is located and to be used with the gaming machines of the premises and because the devices for reading documents (9), such as cards, slips and cheques, and for inserting tokens (10), are designed to read cards, cheques or tokens that can be exchanged In the game establishment where the machine is located and the external communication interface acts as a receiver of codes and SMSs to validate the exchange processes for cash through the cash dispenser device (13).

The cash machine has a magnetic card reader (6), which can be of various types, Identifications or banks.

The cash machine has a dispenser (7) of cheques or credit certificates that can be exchanged in the establishment and used with the gaming machines in the premises.

Transactions can also be generated in other ways, through a mobile phone application or generated through SMS

The top of the cash machine has a device (1) for the commercial identification of the appliance, which may be a luminous sign.

Likewise, in the upper part of the screen there is a communication device (2) (with a camera and microphone) for remote communication and help to resolve possible incidents.

Internally, the cash machine has internal means of communication within the premises or external through the telephone network, or with the local Wi-Fi Internet access network.

On the other hand, the machine's cash dispenser (13) may have several dispensers, for example, a banknote dispenser and a coin dispenser.

Finally, the structure of the machine, which also has the shape of a piece of furniture, can have commercial decorative elements on the outside.

Finally, the shape, materials and dimensions may be variable and, in general, everything that is accessory and secondary, provided that it does not alter or modify the essentiality of the improvements that have been described.

## Claims

1. Automatic cash machine set for obtaining credit with a validation machine thereof in premises with gaming machines comprised of an automatic cash structure, of rectangular shape, comprising a screen (4) associated with a set of pushbuttons (3) on its perimeter, an independent keyboard (5) for carrying out commercial transactions and a magnetic card reader (6), together with a validation machine for cards, slips, cheques, tokens and SMS codes, consisting of a furniture-type structure (8) containing the main elements: an interface for communication with the outside and reading of documents (9), such as cards, slips and cheques, a token insert device (10), a screen (11) for presenting process information, an alpha-numeric keypad (12), a cash dispenser device (13), controlled by a CPU (central processing unit), all **characterised in that** it has a dispenser (7) of slips or credit certificates exchangeable in the establishment where it is located and to be used with the local gaming machines and because the document (9) reading devices, such as cards, slips and cheques, and for inserting tokens (10), are designed to read cards, slips, cheques or tokens that can be exchanged in the game establishment where the machine is located and the external communication interface acts as a receiver of codes and SMSs to validate the cash exchange processes through the cash dispenser device (13).

2. Automatic cash machine set for obtaining credit with a validation machine thereof in premises with gaming machines, according to first claim, **characterised in that** said magnetic card reader (6) identifies non-bank cards.

3. Automatic cash machine set for obtaining credit with a validation machine thereof in premises with gaming machines, according to at least one of the preceding claims, **characterised in that** the transactions are generated by electronic means by means of a mobile phone application and by means of SMS messages.

4. Automatic cash machine set for obtaining credit with a validation machine thereof in premises with gaming machines, according to at least one of the preceding claims, **characterised in that** the structure of cash machine has In its upper part a commercially identified device (1) of an apparatus consisting of a luminous label.

5. Automatic cash machine set for obtaining credit with a validation machine thereof in premises with gaming machines, according to at least one of the preceding claims, **characterised in that** it has a communication device (2) (with a camera and microphone) for remote communication and help to resolve possible incidents.

6. Automatic cash machine set for obtaining credit with a validation machine thereof in premises with gaming machines, according to at least one of the preceding claims, **characterised In that**, internally, the cash machine has internal means of communication inside the premises and external means through the telephone network and with the premise's Wi-Fi network.

7. Automatic cash machine set for obtaining credit with a validation machine thereof in premises with gaming machines, according to at least one of the preceding claims, **characterised in that** the aforementioned cash dispenser device (13) comprises a banknote dispenser and a coin dispenser.

8. Automatic cash machine set for obtaining credit with a validation machine thereof in premises with gaming machines, according to at least one of the preceding claims, **characterised in that** the structure of cash machine has in its exterior decorative commercial-type elements.
